# EUROPÄISCHE PATENTSCHRIFT

(11) **EP 3 759 328 B1**
(45) Veröffentlichungstag und Bekanntmachung des Hinweises auf die Patenterteilung: **30.03.2022**
(21) Anmeldenummer: 19702389.8
(22) Anmeldetag: 28.01.2019
(51) Int. Cl.: F02B 37/00, F02B 37/16, F02M 35/10, F02M 25/08, F02C 6/12, F04D 29/40, F04F 5/20

(54) **VERDICHTERANORDNUNG FÜR EINE BRENNKRAFTMASCHINE SOWIE VERFAHREN ZUM BETREIBEN EINER VERDICHTERANORDNUNG**
COMPRESSOR ARRANGEMENT FOR AN INTERNAL COMBUSTION ENGINE AND METHOD OF OPERATING AN COMPRESSOR ARRANGEMENT
AGENCEMENT DE COMPRESSEUR POUR UN MOTEUR À COMBUSTION INTERNE ET PROCÉDÉ DE FONCTIONNEMENT D'UN AGENCEMENT DE COMPRESSEUR

(30) Priorität: 26.02.2018 DE 102018202851
(43) Veröffentlichungstag der Anmeldung: 06.01.2021
(73) Patentinhaber: Audi AG, 85045 Ingolstadt (DE)
(72) Erfinder: KÖHNLEIN, Maximilian, 85139 Wettstetten (DE); SOLBECK, Robert, 85080 Gaimersheim (DE)
(86) Internationale Anmeldenummer: PCT/EP2019/052000
(87) Internationale Veröffentlichungsnummer: WO 2019/162045

(56) Entgegenhaltungen:
- DE-A1-102011 104 424
- DE-A1-102017 204 785
- JP-A- 2015 187 438
- US-A1- 2008 267 765
- US-A1- 2016 305 377
- US-A1- 2016 377 038

## Beschreibung

Die Erfindung betrifft eine Verdichteranordnung für eine Brennkraftmaschine, mit einem in einem Verdichtergehäuse angeordneten, eine Niederdruckseite und eine Hochdruckseite aufweisenden Verdichter und mit einer Unterdruckbereitstellungseinrichtung, die einen einerseits über einen Treibmitteleinlassanschluss an die Hochdruckseite des Verdichters und andererseits über einen Treibmittelauslassanschluss an die Niederdruckseite des Verdichters strömungstechnisch angeschlossenen Treibmittelkanal mit einer Düse und einen strömungstechnisch zwischen dem Treibmitteleinlassanschluss und dem Treibmittelauslassanschluss in den Treibmittelkanal einmündenden Unterdruckkanal aufweist, wobei der Treibmittelkanal in einem von dem Verdichtergehäuse separaten Gehäuse ausgebildet ist, an dem der Treibmitteleinlassanschluss und der Treibmittelauslassanschluss ausgebildet sind, wobei der Treibmitteleinlassanschluss mit einem ersten Anschluss und der Treibmittelauslassanschluss mit einem zweiten Anschluss in strömungstechnische Verbindung bringbar ist. Die Erfindung betrifft weiterhin ein Verfahren zum Betreiben einer Verdichteranordnung.

Aus dem Stand der Technik ist beispielsweise die Druckschrift DE 20 2014 105 108 U1 bekannt. Diese beschreibt ein Motorsystem, das Folgendes umfasst: eine erste und eine zweite Saugvorrichtung, die jeweils eine Soganzapfung in einer Verengung der Saugvorrichtung, eine Soganzapfung in einem Aufweitungskegel der Saugvorrichtung und eine Soganzapfung in einer geraden Röhre, stromabwärts von dem Aufweitungskegel, umfassen, wobei die erste Saugvorrichtung einen mit einer Motoransaugung verbundenen Antriebseinlass und einen mit der Ansaugung stromabwärts von einer Hauptdrossel verbundenen Gemischströmungsauslass umfasst, und wobei die zweite Saugvorrichtung einen mit der Ansaugung stromabwärts von dem Antriebseinlass der ersten Saugvorrichtung verbundenen Gemischströmungsauslass und einen mit der Ansaugung stromabwärts von der Hauptdrossel verbundenen Antriebseinlass umfasst.

Aus dem Stand der Technik ist beispielsweise die Druckschrift DE 10 2017 204 785 A1 bekannt. Diese beschreibt ein Venturimodul für ein Verdichtergehäuse zur Verwendung mit einem Tankentlüftungssystem mit einer ersten Öffnung zur Koppelung mit einem ersten Kanalabschnitt eines Verbindungskanals von einem Hochdruckbereich zu einem Niederdruckbereich eines Verdichtergehäuses, einer zweiten Öffnung zu Koppelung mit einem zweiten Kanalabschnitt des Verbindungskanals, einem Durchgang zwischen der ersten Öffnung und der zweiten Öffnung im Inneren des Venturimoduls in Form einer Venturidüse und einem Abnahmerohr in Form eines Anschlussstutzens zur Koppelung des Venturimoduls mit einem Tankentlüftungssystems. Das Venturimodul ist als ein integrales Bauteil ausgestaltet und weist außerdem einen Flansch zur Befestigung des Venturimoduls an einem Verdichtergehäuse auf. Es wird zudem ein Verdichtergehäuse für einen Verdichter eines Turboladers beschrieben, mit einem Niederdruckbereich, einem Hochdruckbereich, und einem Verbindungskanal von dem Niederdruckbereich zu dem Hochdruckbereich, wobei der Verbindungskanal eine zur Umgebung offene Aussparung zur Aufnahme eines Venturimoduls aufweist.

Die Druckschrift JP 2015-187438 A beschreibt eine Vorrichtung zum Abführen von Treibstoffdampf aus einem Treibstoffbehälter. Dabei ist in einen Einlassanschluss eines Verdichters eine Abführvorrichtung integriert, wobei die Abführeinrichtung über eine Strömungsverbindung einen Teil der Ladeluft stromabwärts des Verdichters entnimmt und der Treibstoffdampf aus dem Treibstoffbehälter dem Verdichter zugeführt wird.

Weiterhin sind aus dem Stand der Technik die Druckschriften US 9,086,036 B2, DE102011104424 A1 und US2008267765 bekannt.

Es ist Aufgabe der Erfindung, eine Verdichteranordnung für eine Brennkraftmaschine vorzuschlagen, welche gegenüber bekannten Verdichteranordnungen Vorteile aufweist, insbesondere eine einfache und kostengünstige Möglichkeit zur Unterdruckbereitstellung aufweist und zudem zuverlässig diagnostizierbar ist.

Dies wird erfindungsgemäß mit einer Verdichteranordnung für eine Brennkraftmaschine mit den Merkmalen des Anspruchs 1 erreicht. Dabei ist vorgesehen, dass der erste Anschluss und der zweite Anschluss an einem mit dem Verdichtergehäuse verbundenen Strömungsführungselement ausgebildet sind, und dass lediglich der Treibmittelauslassanschluss als Steckanschluss ausgebildet ist, wobei der Treibmittelauslassanschluss einen Steckverbindungsvorsprung und der zweite Anschluss eine Steckverbindungsaufnahme zur Aufnahme des Steckverbindungsvorsprungs aufweisen, wobei der Treibmitteleinlassanschluss und der erste Anschluss jeweils eine eine Anlagefläche durchgreifende Durchtrittsöffnung aufweisen, sodass eine Strömungsverbindung zwischen dem Treibmitteleinlassanschluss und dem ersten Anschluss durch planes Anlegen der Anlageflächen aneinander herstellbar ist.

Grundsätzlich ist vorgesehen, dass der Treibmittelkanal in einem von dem Verdichtergehäuse separaten Gehäuse ausgebildet ist, an dem der Treibmitteleinlassanschluss und der Treibmittelauslassanschluss ausgebildet sind.

Die Verdichteranordnung kann der Brennkraftmaschine zugeordnet und insoweit Bestandteil der Brennkraftmaschine sein. Sie dient bevorzugt der Bereitstellung von verdichtetem Frischgas für die Brennkraftmaschine. Die Verdichteranordnung weist hierzu den Verdichter auf, welchem auf der Niederdruckseite Frischgas bei einem ersten Druck bereitgestellt wird. Der Verdichter verdichtet das bereitgestellte Frischgas und stellt es wiederum auf der Hochdruckseite für die Brennkraftmaschine bereit, nämlich bei einem zweiten Druck, welcher höher ist als der erste Druck. Das Frischgas kann in Form von Frischluft, jedoch auch als Frischluft-Abgas-Gemisch vorliegen. In letzterem Fall ist die Brennkraftmaschine beispielsweise mit einer externen Abgasrückführung ausgestattet. Der Verdichter beziehungsweise die Verdichteranordnung kann beispielsweise Bestandteil eines Abgasturboladers sein, welcher der Brennkraftmaschine zugeordnet ist.

Die Verdichteranordnung verfügt zusätzlich zu dem Verdichter über die Unterdruckbereitstellungseinrichtung, mittels welcher Unterdruck für einen Unterdruckverbraucher bereitgestellt werden kann beziehungsweise bereitgestellt wird. Der Unterdruckverbraucher liegt beispielsweise in Form einer Spüleinrichtung für einen Filter, insbesondere für einen Aktivkohlefilter, und/oder als Entlüftungseinrichtung, insbesondere als Kurbelgehäuseentlüftungseinrichtung vor.

Die Unterdruckbereitstellungseinrichtung verfügt über den Treibmittelkanal, über welchen zur Unterdruckbereitstellung ein Treibmittel geführt werden kann. Als Treibmittel für die Unterdruckbereitstellung wird das mittels des Verdichters verdichtete Frischgas verwendet. Hierzu ist der Treibmittelkanal einerseits an die Hochdruckseite des Verdichters und andererseits an die Niederdruckseite des Verdichters strömungstechnisch angeschlossen. Zum Anschließen des Treibmittelkanals an die Hochdruckseite verfügt die Unterdruckbereitstellungseinrichtung über den Treibmitteleinlassanschluss und zum Anschließen an die Niederdruckseite über den Treibmittelauslassanschluss.

Die Unterdruckbereitstellungseinrichtung, insbesondere der Treibmittelkanal, stellt einen Bypass für den Verdichter dar, über welchen bereits verdichtetes Frischgas von der Hochdruckseite zurück auf die Niederdruckseite geführt werden kann beziehungsweise geführt wird. Zum Bereitstellen des Unterdrucks mündet der Unterdruckkanal in den Treibmittelkanal ein. In dem Unterdruckkanal beziehungsweise an einem Unterdruckanschluss der Unterdruckbereitstellungseinrichtung, welche auf der dem Treibmittelkanal abgewandten Seite des Unterdruckkanals vorliegt, wird der Unterdruck bei einer Durchströmung des Treibmittelkanals mit Treibmittel beziehungsweise Frischgas bereitgestellt.

Zur Bereitstellung des Unterdrucks ist in dem Treibmittelkanal die Düse angeordnet. Über die Düse ist der Treibmitteleinlassanschluss mit dem Treibmittelauslassanschluss strömungsverbunden. Der Unterdruckkanal mündet beispielsweise in die Düse oder stromabwärts der Düse, insbesondere unmittelbar stromabwärts der Düse, in den Treibmittelkanal ein. In ersterem Fall liegt die Düse in Form einer Venturi-Düse vor, bei welcher der Venturi-Effekt ausgenutzt wird, um aufgrund des den Treibmittelkanal durchströmenden Treibmittels den Unterdruck in dem Unterdruckkanal und mithin an dem Unterdruckanschluss bereitzustellen.

Im Falle der Venturi-Düse stellt die Düse eine Querschnittsverringerung dar, in welche der Treibmittelkanal einmündet. Besonders bevorzugt ist eine kontinuierliche Querschnittsverringerung bis hin zu einem kleinsten Durchströmungsquerschnitt ausgebildet, an welchen sich eine kontinuierliche Vergrößerung des Durchströmungsquerschnitts, also eine Verkleinerung der Querschnittsverringerung, anschließt. Der Treibmittelkanal mündet bevorzugt im Bereich des kleinsten Durchströmungsquerschnitts, zumindest jedoch im Bereich der Querschnittsverringerung, in die Düse ein.

Mündet der Treibmittelkanal stromabwärts der Düse in den Treibmittelkanal ein, so liegt die Düse als Treibstrahldüse einer Strahlpumpe beziehungsweise Treibstrahlpumpe, vor. Im Falle der Strahlpumpe mündet die Treibstrahldüse in eine Mischkammer ein, welche einen größeren Durchströmungsquerschnitt aufweist als eine Austrittsöffnung der Düse, über welche die Düse an die Mischkammer angeschlossen ist. Insoweit liegt im Falle der Treibstrahldüse eine plötzliche Aufweitung des Durchströmungsquerschnitts vor. Der Unterdruckkanal mündet ebenfalls in die Mischkammer ein, sodass bei einer Durchströmung des Treibmittelkanals mit Treibmittel das in dem Unterdruckkanal vorliegende Fluid von dem Treibmittel in Richtung des Treibmittelauslassanschlusses mitgenommen wird, insbesondere durch Impulseintrag.

Der Treibmittelkanal und mithin die Düse sind in dem Gehäuse angeordnet, welches separat von dem Verdichtergehäuse vorliegt beziehungsweise ausgebildet ist. Das Gehäuse, welches Bestandteil der Unterdruckbereitstellungseinrichtung ist, ist an dem Verdichtergehäuse montierbar. Vor einem Betrieb der Verdichteranordnung ist insoweit - soweit das Bereitstellen von Unterdruck gewünscht ist - das Gehäuse der Unterdruckbereitstellungseinrichtung derart anzuordnen, dass der Treibmittelkanal einerseits mit der Hochdruckseite und andererseits mit der Niederdruckseite des Verdichters strömungsverbunden ist.

Das Ausbilden des Treibmittelkanals in dem separaten Gehäuse, welches einteilig oder mehrteilig ausgebildet sein kann, hat den Vorteil, dass eine einfache Austauschbarkeit der Unterdruckbereitstellungseinrichtung gegeben ist. Zudem kann die Unterdruckbereitstellungseinrichtung besonders effizient montiert werden, insbesondere falls die Unterdruckbereitstellungseinrichtung vollständig in dem Gehäuse ausgebildet ist. In diesem Fall sind zusätzlich zu dem Treibmittelkanal die Düse und der Unterdruckkanal in dem Gehäuse ausgebildet.

Vorzugsweise ist wenigstens ein Bereich des Treibmittelkanals, in welchem die Düse angeordnet ist, sowie der Unterdruckkanal, in einem einstückig und/oder materialeinheitlich ausgeführten Teil des Gehäuses angeordnet. Hierbei werden sowohl der Bereich des Treibmittelkanals als auch die Düse und der Unterdruckkanal von einer Ausnehmung des Gehäuses dargestellt. Der Gehäuseteil kann besonders bevorzugt als Spritzgießbauteil vorliegen, sodass der Bereich des Treibmittelkanals, die Düse und der Unterdruckkanal während eines gemeinsamen Spritzgießvorgangs ausgebildet werden beziehungsweise ausgebildet sind.

An dem Gehäuse sind sowohl der Treibmitteleinlassanschluss als auch der Treibmittelauslassanschluss ausgebildet. Einer der beiden Anschlüsse, nämlich der Treibmittelauslassanschluss, ist als Steckanschluss ausgebildet, mittels welchem eine Strömungsverbindung durch Einstecken hergestellt werden kann. Der Steckanschluss ermöglicht das Herstellen einer Strömungsverbindung mit einer hohen Dichtigkeit, welche zudem äußerst tolerant gegen Verlagerungen, insbesondere der Unterdruckbereitstellungseinrichtung bezüglich des Verdichtergehäuses, ist.

Die beschriebene Ausgestaltung der Verdichteranordnung, insbesondere der Unterdruckbereitstellungseinrichtung und des Gehäuses, ermöglicht eine einfache Montage bei gleichzeitig hervorragender Dichtheit. Zum Herstellen der Strömungsverbindung des als Steckanschluss ausgebildeten Anschlusses ist lediglich ein Einstecken zweier Elemente ineinander notwendig. Zudem ermöglicht die Verdichteranordnung eine gute Diagnostizierbarkeit, weil die Funktionsfähigkeit, insbesondere die Dichtheit, der Unterdruckbereitstellungseinrichtung mithilfe eines Drucksensors diagnostizierbar ist, der den Druck in der Verdichteranordnung, beispielsweise in dem Unterdruckkanal, an dem Unterdruckanschluss oder auf der Hochdruckseite des Verdichters, misst. Ein Drucksensor ist üblicherweise in jedem Fall vorhanden, um den Druck des Frischgases, welches dann auch als Ladeluft bezeichnet werden kann, zu bestimmen.

Zusätzlich oder alternativ kann die Unterdruckbereitstellungseinrichtung einen weiteren Drucksensor aufweisen, mittels welchem der Druck in dem Unterdruckkanal ermittelt wird. Zur vollständigen Diagnose beziehungsweise Dichtheitsprüfung der Unterdruckbereitstellungseinrichtung sind insoweit lediglich der üblicherweise ohnehin vorhandene Drucksensor des Verdichters und/oder der dem Unterdruckkanal zugeordnete weitere Drucksensor notwendig. Insoweit wird mithilfe der beschriebenen Verdichteranordnung zudem eine hohe Betriebssicherheit erzielt.

DieErfindung sieht vor, dass der Treibmitteleinlassanschluss mit einem ersten Anschluss und der Treibmittelauslassanschluss mit einem zweiten Anschluss in strömungstechnische Verbindung bringbar ist, wobei der erste Anschluss und der zweite Anschluss an dem Verdichtergehäuse oder an einem mit dem Verdichtergehäuse verbundenen Strömungsführungselement ausgebildet sind. Über den ersten Anschluss kann insoweit der Unterdruckbereitstellungseinrichtung beziehungsweise dem Treibmittelkanal Treibmittel zugeführt und über den zweiten Anschluss entnommen werden. In anderen Worten ist der Treibmittelkanal über den ersten Anschluss mit der Hochdruckseite des Verdichters und über den zweiten Anschluss mit der Niederdruckseite des Verdichters strömungstechnisch verbunden oder zumindest verbindbar.

Die beiden Anschlüsse, also der erste Anschluss und der zweite Anschluss, können jeweils an dem Verdichtergehäuse vorliegen. Alternativ sind sie an dem Strömungsführungselement ausgebildet. Im Falle der Ausgestaltung der Anschlüsse an dem Verdichtergehäuse wird die Unterdruckbereitstellungseinrichtung beziehungsweise ihr Gehäuse unmittelbar an dem Verdichtergehäuse angeordnet, nämlich derart, dass der Treibmitteleinlassanschluss mit dem ersten Anschluss und der Treibmittelauslassanschluss mit dem zweiten Anschluss in Strömungsverbindung steht.

Liegen die Anschlüsse an dem Strömungsführungselement vor, so wird das Strömungsführungselement strömungstechnisch an den Verdichter angeschlossen, nämlich derart, dass der erste Anschluss nachfolgend mit der Hochdruckseite und der zweite Anschluss mit der Niederdruckseite des Verdichters in Strömungsverbindung steht. Das Strömungsführungselement kann zusätzlich einen Frischgaseinlasskanal aufweisen, über welchen dem Verdichter Frischgas zuführbar ist. Hierzu ist der Frischgaseinlasskanal einerseits an die Niederdruckseite des Verdichters und andererseits an eine Außenumgebung der Brennkraftmaschine angeschlossen, insbesondere über einen Filter beziehungsweise Luftfilter.

Das Strömungsführungselement ist separat von dem Verdichtergehäuse ausgebildet beziehungsweise hergestellt und wird nach seiner Herstellung an diesem angeordnet und befestigt. Das Strömungsführungselement kann materialeinheitlich mit dem Verdichtergehäuse ausgebildet sein und insoweit aus demselben Material bestehen. Besonders bevorzugt ist das Strömungsführungselement jedoch aus einem Material, welches von einem Material des Verdichtergehäuses verschieden ist. Beispielsweise besteht das Strömungsführungselement aus einem Kunststoff, wohingegen das Verdichtergehäuse aus Metall besteht. Sowohl bei der Anordnung der Unterdruckbereitstellungseinrichtung an dem Verdichtergehäuse als auch bei ihrer Anordnung an dem Strömungsführungselement werden die kostengünstige Herstellung, die einfache Montage sowie die hervorragende Diagnostizierbarkeit jeweils erzielt.

Die Erfindung sieht vor, dass der Treibmittelauslassanschluss einen Steckverbindungsvorsprung und der zweite Anschluss eine Steckverbindungsaufnahme zur Aufnahme des Steckverbindungsvorsprungs aufweist. In anderen Worten liegt der Steckverbindungsvorsprung an dem Gehäuse der Unterdruckbereitstellungseinrichtung vor, insbesondere ist er mit diesem materialeinheitlich und/oder einstückig ausgeführt. Das bedeutet, dass der Steckverbindungsvorsprung bevorzugt während des vorstehend bereits erwähnten Spritzgießvorgangs gemeinsam mit dem Treibmittelkanal, der Düse und dem Unterdruckkanal ausgebildet ist.

Der zweite Anschluss weist hingegen die Steckverbindungsaufnahme auf, welche derart ausgestaltet ist, dass nach bestimmungsgemäßer Anordnung des Steckverbindungsvorsprungs in der Steckverbindungsaufnahme die Strömungsverbindung zwischen dem Treibmittelauslassanschluss und dem zweiten Anschluss und mithin zwischen dem Treibmittelkanal und der Niederdruckseite des Verdichters hergestellt ist. Eine derartige Ausgestaltung ermöglicht eine besonders einfache Montage.

Die Erfindung sieht vor, dass der Treibmitteleinlassanschluss und der erste Anschluss jeweils eine eine Anlagefläche durchgreifende Durchtrittsöffnung aufweisen, sodass eine Strömungsverbindung zwischen dem Treibmitteleinlassanschluss und dem ersten Anschluss durch planes Anlegen der Anlageflächen aneinander herstellbar ist. Die Durchtrittsöffnung des Treibmitteleinlassanschlusses durchgreift insoweit eine an dem Gehäuse der Unterdruckbereitstellungseinrichtung ausgebildete Anlagefläche, die Durchtrittsöffnung des ersten Anschlusses eine an dem Verdichtergehäuse oder dem Strömungsführungselement ausgebildete Anlagefläche. Die Anlageflächen sind vorzugsweise jeweils vollständig plan. Die Durchtrittsöffnungen sind besonders bevorzugt jeweils randgeschlossen in der entsprechenden Anlagefläche ausgebildet, weisen also einen in Umfangsrichtung durchgehenden Rand auf.

Die Strömungsverbindung zwischen dem Treibmitteleinlassanschluss und dem ersten Anschluss soll durch planes Anlegen der Anlageflächen aneinander herstellbar sein. Hierzu werden die Anlageflächen vorzugsweise dicht aneinander angepresst und/oder mittels einer Dichtung gegeneinander abgedichtet. Die durch das plane Anlegen der Anlageflächen aneinander ausgebildete Strömungsverbindung weist eine vergleichsweise geringe Toleranz gegenüber Verlagerungen auf, insbesondere im Vergleich zu der mittels des Steckanschlusses hergestellten Strömungsverbindung. Bei einem Lösen des Gehäuses bezüglich des Verdichtergehäuses, insbesondere einem unbeabsichtigten Lösen, tritt insoweit zunächst auf Seiten des Treibmitteleinlassanschlusses eine Undichtigkeit auf. Erst bei einer weiteren Verlagerung kann die auf Seiten des Treibmittelauslassanschlusses vorliegende Strömungsverbindung undicht werden.

Mithilfe des bereits beschriebenen Drucksensors beziehungsweise des weiteren Drucksensors ist jedoch bereits das Unterbrechen der Strömungsverbindung zwischen dem Treibmitteleinlassanschluss und dem ersten Anschluss diagnostizierbar, sodass rechtzeitig auf einen Fehler erkannt und dieser angezeigt werden kann. Auf diese Art und Weise wird verhindert, dass das über den Treibmittelkanal von der Unterdruckbereitstellungseinrichtung angesaugte Fluid aus der Verdichteranordnung entweichen kann. Vielmehr wird dieses auch dann noch zuverlässig über den Treibmittelauslassanschluss dem Verdichter zugeführt, wenn die Strömungsverbindung zwischen dem Treibmitteleinlassanschluss und dem ersten Anschluss bereits unterbrochen ist beziehungsweise undicht ist. Insoweit ist die bereits erwähnte hervorragende Diagnostizierbarkeit der Unterdruckbereitstellungseinrichtung umgesetzt.

Eine bevorzugte weitere Ausgestaltung der Erfindung sieht vor, dass der Treibmitteleinlassanschluss eine mit dem ersten Anschluss zusammenwirkende Axialringdichtung und der Treibmittelauslassanschluss eine mit dem zweiten Anschluss zusammenwirkende Radialringdichtung aufweist. Die Axialringdichtung umgreift in Umfangsrichtung den Treibmitteleinlassanschluss und nach der Montage auch den ersten Anschluss vollständig.

Entsprechendes gilt für die Radialringdichtung und den Treibmittelauslassanschluss sowie den zweiten Anschluss. Unter der Axialringdichtung ist eine Ringdichtung zu verstehen, bei welcher die Dichtwirkung durch axiales elastisches Komprimieren erzielt wird. Entsprechend ist die Radialringdichtung eine Ringdichtung, bei welcher die Dichtwirkung durch elastisches radiales Komprimieren bewirkt wird.

Vorzugsweise ist es vorgesehen, dass die Axialringdichtung zur Realisierung der Dichtwirkung an den Anlageflächen des Treibmitteleinlassanschlusses und des ersten Anschlusses oder zumindest einer dieser Anlageflächen dichtend anliegt. Beispielsweise ist die Axialringdichtung in einer Dichtungsaufnahme angeordnet, die eine der Anlageflächen durchgreift, und liegt nach der Montage an der jeweils anderen Anlagefläche dichtend an. Selbstverständlich können auch in beiden Anlageflächen derartige Dichtungsaufnahmen vorliegen, solange sichergestellt ist, dass nach der Montage der Treibmitteleinlassanschluss und der erste Anschluss dicht miteinander verbunden sind.

Die Radialringdichtung ist vorzugsweise derart ausgebildet, dass sie an dem Steckverbindungsvorsprung vorliegt und diesen in Umfangsrichtung umgreift. Die Radialringdichtung wird zusammen mit dem Steckverbindungsvorsprung in die Steckverbindungsaufnahme eingebracht und liegt nachfolgend an einer die Steckverbindungsaufnahme in radialer Richtung begrenzenden Wand dichtend an, insbesondere in Umfangsrichtung durchgehend. Beispielsweise ist in dem Steckverbindungsvorsprung eine Dichtungsaufnahme ausgebildet, in welcher die Radialringdichtung angeordnet ist, um eine zuverlässige Befestigung der Radialringdichtung zu realisieren und mithin ein Verlieren der Radialringdichtung zu verhindern.

Eine solche Wahl der Dichtungen, also das Vorsehen der Axialringdichtung an dem Treibmitteleinlassanschluss und das Vorsehen der Radialringdichtung an dem Treibmittelauslassanschluss, stellt die vorstehend bereits beschriebene zuverlässige Diagnostizierbarkeit sicher, indem die Strömungsverbindung des Treibmittelauslassanschlusses mit dem zweiten Anschluss aufgrund der Radialringdichtung gegenüber Verlagerungen wesentlich toleranter ist als die Strömungsverbindung zwischen dem Treibmitteleinlassanschluss und dem ersten Anschluss über die Axialringdichtung.

Bei einer Verlagerung der Unterdruckbereitstellungseinrichtung, insbesondere des Gehäuses, bezüglich dem Verdichtergehäuse und/oder dem Strömungsführungselement ausgehend von einer ersten Stellung, in der beide Strömungsverbindungen dicht sind, in Richtung einer zweiten Stellung, in der beide Strömungsverbindungen unterbrochen beziehungsweise undicht sind, wird also zunächst die Strömungsverbindung zwischen dem Treibmitteleinlassanschluss und dem ersten Anschluss und erst später die Strömungsverbindung zwischen dem Treibmittelauslassanschluss und dem zweiten Anschluss undicht.

Eine weitere bevorzugte Ausführungsform der Erfindung sieht vor, dass der Treibmittelkanal innerhalb des Gehäuses eine Umlenkung aufweist, sodass der Treibmitteleinlassanschluss und der Treibmittelauslassanschluss auf derselben Seite des Gehäuses angeordnet sind. Eine derartige Ausgestaltung stellt einerseits eine kompakte Bauform der Unterdruckbereitstellungseinrichtung und mithin der Verdichteranordnung sicher. Andererseits ist eine äußerst einfache und rasche Montage möglich, weil das Montieren der Unterdruckbereitstellungseinrichtung beziehungsweise ihres Gehäuses in einer einzigen Montagerichtung erfolgt.

Zum Herstellen der Strömungsverbindung zwischen den Anschlüssen des Gehäuses und den Anschlüssen des Verdichtergehäuses beziehungsweise des Strömungsführungselements ist also lediglich das Verlagern in die Montagerichtung notwendig. Bei der Verlagerung wird zunächst der Steckverbindungsvorsprung in die Steckverbindungsaufnahme eingreifen und anschließend die Anlageflächen des Treibmitteleinlassanschlusses und des ersten Anschlusses dichtend in Anlagekontakt geraten.

Eine weitere bevorzugte Ausgestaltung der Erfindung sieht vor, dass der Treibmitteleinlassanschluss und der Treibmittelauslassanschluss parallel versetzt zueinander an dem Gehäuse ausgebildet sind. Hierunter ist zu verstehen, dass eine den Treibmitteleinlassanschluss definierende gedachte Ebene und eine den Treibmittelauslassanschluss definierende gedachte Ebene parallel liegen, jedoch beabstandet voneinander angeordnet sind. Im Falle des Treibmitteleinlassanschlusses fällt die gedachte Ebene beispielsweise mit der Anlagefläche zusammen, die von der Durchtrittsöffnung durchgriffen ist. Im Falle des Treibmittelauslassanschlusses nimmt die Ebene vorzugsweise durchgehend den Rand des Steckverbindungsvorsprungs auf seiner dem Treibmittelkanal am weitesten abgewandten Seite auf. Bevorzugt stehen beide Ebenen senkrecht auf der Längsmittelachse des Treibmittelkanals an dem Treibmitteleinlassanschluss und/oder einer Längsmittelachse des Treibmittelkanals an dem Treibmittelauslassanschluss.

Die versetzte Ausgestaltung von Treibmitteleinlassanschluss und Treibmittelauslassanschluss wird bevorzugt mittels des Steckverbindungsvorsprungs umgesetzt. In anderen Worten beginnt der Steckverbindungsvorsprung in der den Treibmitteleinlassanschluss definierenden Ebene und erstreckt sich bis hin zu der den Treibmittelauslassanschluss definierenden Ebene. Hierdurch wird eine hervorragende Dichtheit der Strömungsverbindung zwischen den Anschlüssen der Unterdruckbereitstellungseinrichtung und den Anschlüssen des Verdichtergehäuses beziehungsweise des Strömungsführungselements erzielt.

Eine weitere Ausführungsform der Erfindung sieht vor, dass die Umlenkung mittels eines den Treibmittelkanal bereichsweise begrenzenden Deckels des Gehäuses ausgebildet ist. Das Gehäuse ist insoweit mehrteilig ausgebildet und weist ein Grundelement und den Deckel auf. In dem Grundelement ist beispielsweise ein Teil des Treibmittelkanals, insbesondere ein Großteil des Treibmittelkanals angeordnet. Zusätzlich sind vorzugsweise in dem Grundelement der Unterdruckkanal zumindest bereichsweise sowie die Düse angeordnet. Der Deckel ist lösbar oder unlösbar mit dem Grundelement verbunden. Das lösbare Verbinden erfolgt beispielsweise formschlüssig, insbesondere durch eine Rastverbindung. Das unlösbare Verbinden kann beispielsweise durch Schweißen realisiert sein. Die Verwendung des Deckels ermöglicht ein einfaches und kostengünstiges Ausgestalten des Gehäuses, beispielsweise durch Spritzgießen, wobei das Grundelement und der Deckel separat voneinander hergestellt werden.

Schließlich kann im Rahmen einer weiteren Ausgestaltung der Erfindung vorgesehen sein, dass das Gehäuse mittels wenigstens einer Schraube befestigbar ist, wobei eine Längsmittelachse einer Aufnahmeöffnung des Gehäuses zur Aufnahme der Schraube parallel zu einer Längsmittelachse des Treibmittelkanals an dem Treibmitteleinlassanschluss und/oder einer Längsmittelachse des Treibmittelkanals an dem Treibmittelauslassanschluss angeordnet ist. Die Schraube dient der Befestigung des Gehäuses beispielsweise an dem Verdichtergehäuse oder an dem Strömungsführungselement. Zur Aufnahme der Schraube verfügt das Gehäuse über die Aufnahmeöffnung, welche derart bemessen ist, dass ein Schaft der Schraube durch sie hindurchführbar ist, wohingegen ein Kopf der Schraube an einem die Aufnahmeöffnung begrenzenden Rand anliegt beziehungsweise der Rand einen Endanschlag für den Kopf darstellt.

Die Aufnahmeöffnung ist in Richtung ihrer Längsmittelachse vorzugsweise vollständig gerade. Die Längsmittelachse der Aufnahmeöffnung verläuft parallel zu der Längsmittelachse des Treibmittelkanals auf Seiten des Treibmitteleinlassanschlusses und/oder auf Seiten des Treibmittelauslassanschlusses. Hierdurch wirkt eine mittels der Schraube bewirkbare Montagekraft zwischen dem Gehäuse und dem Verdichtergehäuse beziehungsweise dem Strömungsführungselement in einer Richtung, welche einem Entfernen der Anschlüsse des Gehäuses von den Anschlüssen des Verdichtergehäuses beziehungsweise des Strömungsführungselements entgegengerichtet ist.

In anderen Worten wird mittels der Schraube das Gehäuse derart an dem Verdichtergehäuse beziehungsweise dem Strömungsführungselement befestigt, dass die Anlageflächen des Treibmitteleinlassanschlusses und des ersten Anschlusses aneinandergedrängt werden. Besonders bevorzugt steht hierzu die Längsmittelachse der Aufnahmeöffnung für die Schraube senkrecht auf beiden Anlageflächen. Eine solche Ausgestaltung stellt insoweit eine hervorragende Dichtheit der Verdichteranordnung sicher.

Die Erfindung betrifft weiterhin ein Verfahren zum Betreiben einer Verdichteranordnung für eine Brennkraftmaschine, insbesondere einer Verdichteranordnung gemäß den Ausführungen im Rahmen dieser Beschreibung, wobei die Verdichteranordnung über einen in einem Verdichtergehäuse angeordneten, eine Niederdruckseite und eine Hochdruckseite aufweisenden Verdichter und über eine Unterdruckbereitstellungseinrichtung verfügt, die einen einerseits über einen Treibmitteleinlassanschluss an die Hochdruckseite des Verdichters und andererseits über einen Treibmittelauslassanschluss an die Niederdruckseite des Verdichters strömungstechnisch angeschlossenen Treibmittelkanal mit einer Düse und einen strömungstechnisch zwischen dem Treibmitteleinlassanschluss und dem Treibmittelauslassanschluss in den Treibmittelkanal einmündenden Unterdruckkanal aufweist.

Dabei ist vorgesehen, dass der Treibmittelkanal in einem von dem Verdichtergehäuse separaten Gehäuse ausgebildet ist, an dem der Treibmitteleinlassanschluss und der Treibmittelauslassanschluss ausgebildet sind.

Weiterhin ist vorgesehen, dass der Treibmitteleinlassanschluss mit einem ersten Anschluss und der Treibmittelauslassanschluss mit einem zweiten Anschluss in strömungstechnische Verbindung bringbar ist, wobei der erste Anschluss und der zweite Anschluss an einem mit dem Verdichtergehäuse verbundenen Strömungsführungselement ausgebildet sind, und dass lediglich der Treibmittelauslassanschluss als Steckanschluss ausgebildet ist, wobei der Treibmittelauslasssanschluss einen Steckverbindungsvorsprung und der zweite Anschluss eine Steckverbindungsaufnahme zur Aufnahme des Steckverbindungsvorsprungs aufweist, wobei der Treibmitteleinlassanschluss und der erste Anschluss jeweils eine einen Anlagefläche durchgreifende Durchtrittsöffnung aufweisen, sodass eine Strömungsverbindung zwischen dem Treibmitteleinlassanschluss und dem ersten Anschluss durch planes Anlegen der Anlageflächen aneinander hergestellt ist, und dass mittels eines Drucksensors ein Druck in dem Unterdruckkanal oder auf der Hochdruckseite des Verdichters gemessen und bei Unterschreiten oder Überschreiten eines Grenzwerts durch den Druck auf eine Leckage erkannt wird.

Auf die Vorteile einer derartigen Vorgehensweise beziehungsweise einer derartigen Ausgestaltung der Verdichteranordnung wurde bereits hingewiesen. Sowohl die Verdichteranordnung als auch das Verfahren zu ihrem Betreiben können gemäß den Ausführungen im Rahmen dieser Beschreibung weitergebildet sein, sodass insoweit auf diese verwiesen wird.

Der Drucksensor dient beispielsweise dem Messen des Druck in dem Unterdruckkanal, an dem Unterdruckanschluss oder auf der Hochdruckseite des Verdichters. Weicht der gemessene Druck von dem Grenzwert ab oder unterschreitet oder überschreitet er ihn, so kann davon ausgegangen werden, dass die Leckage oder eine andere Fehlfunktion vorliegt.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Verdichteranordnung für eine Brennkraftmaschine, welche eine Unterdruckbereitstellungseinrichtung zur Bereitstellung eines Unterdrucks für wenigstens einen Unterdruckverbraucher aufweist,
- Figur 2: eine schematische Darstellung eines Bereichs der Verdichteranordnung in einer Explosionsdarstellung, sowie
- Figur 3: eine schematische Schnittdarstellung durch die Unterdruckbereitstellungseinrichtung.

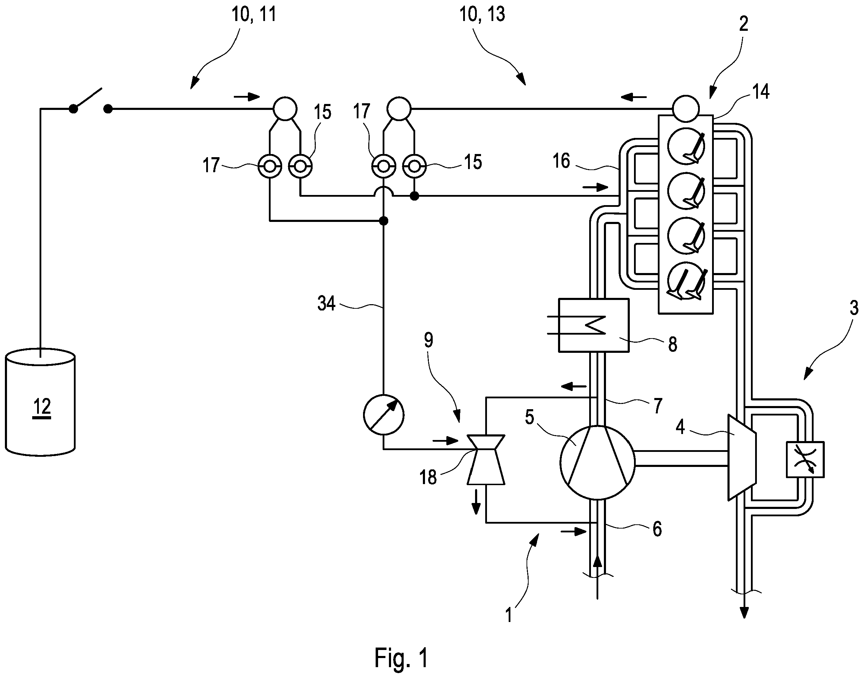

Die Figur 1 zeigt eine schematische Darstellung einer Verdichteranordnung 1 für eine Brennkraftmaschine 2. Die Verdichteranordnung 1 ist Bestandteil eines Abgasturboladers 3, der eine Turbine 4 und einen Verdichter 5 aufweist, wobei letzterer Bestandteil der Verdichteranordnung 1 ist. Der Turbine 4 ist Abgas der Brennkraftmaschine 2 zuführbar. Mithilfe der Turbine 4 wird in dem Abgas enthaltene Strömungsenergie und/oder Enthalpie in kinetische Energie umgewandelt, welche wiederum zum Antreiben des Verdichters 5 dient. Der Verdichter 5 dient zum Verdichten von Frischgas, wobei dem Verdichter 5 das Frischgas auf einer Niederdruckseite 6 bereitgestellt wird. Das mittels des Verdichters 5 verdichtete Frischgas steht auf seiner Hochdruckseite 7 der Brennkraftmaschine 2 zur Verfügung. Strömungstechnisch zwischen der Hochdruckseite 7 des Verdichters 5 und der Brennkraftmaschine 2 kann ein Ladeluftkühler 8 vorgesehen sein.

Strömungstechnisch parallel zu dem Verdichter 5 ist eine Unterdruckbereitstellungseinrichtung 9 vorgesehen, welche der Bereitstellung von Unterdruck für wenigstens einen Unterdruckverbraucher 10, in dem hier dargestellten Ausführungsbeispiel für zwei Unterdruckverbraucher 10, dient. Einer der Unterdruckverbraucher 10 liegt als Spüleinrichtung 11 für einen Filter 12 vor, wobei der Filter 12 vorzugsweise als Aktivkohlefilter ausgestaltet ist. Ein anderer der Unterdruckverbraucher 10 ist als Entlüftungseinrichtung 13 ausgestaltet, die der Entlüftung eines Zylinderkurbelgehäuses 14 der Brennkraftmaschine 2 dient.

Der Unterdruckverbraucher 10 beziehungsweise die Unterdruckverbraucher 10 sind jeweils über Rückschlagventile 15 an ein Saugrohr 16 der Brennkraftmaschine 2 beziehungsweise einen Einlasskrümmer angeschlossen. Zusätzlich ist der Unterdruckverbraucher 10 beziehungsweise sind die Unterdruckverbraucher 10 über Rückschlagventile 17 an einen Unterdruckanschluss 18 der Unterdruckbereitstellungseinrichtung 9 angeschlossen. Der Unterdruckverbraucher 10 beziehungsweise die Unterdruckverbraucher 10 sind insoweit stets strömungstechnisch mit dem Saugrohr 16 oder dem Unterdruckanschluss 18 verbunden, je nachdem, wo ein stärkerer Unterdruck vorliegt.

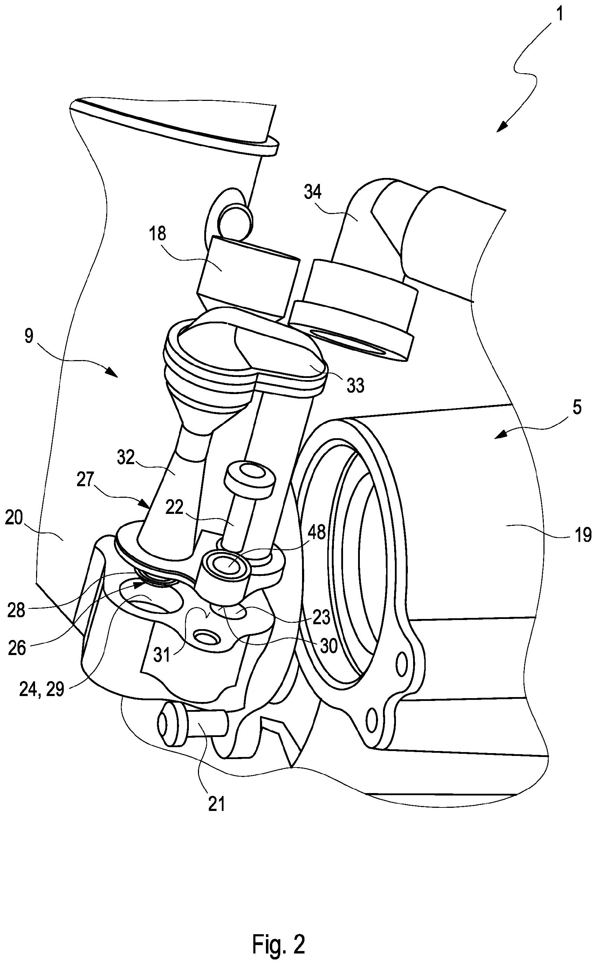

Die Figur 2 zeigt eine schematische Darstellung eines Bereichs der Verdichteranordnung 1 nach Art einer Explosionsdarstellung. Zu erkennen ist der Verdichter 5 des Abgasturboladers 3 sowie ein Verdichtergehäuse 19 des Verdichters 5. An den Verdichter 5 ist strömungstechnisch ein Strömungsführungselement 20 angeschlossen, in welchem ein Frischgaseinlasskanal vorliegt. Über den Frischgaseinlasskanal ist die Niederdruckseite 6 des Verdichters 5 mit einer Außenumgebung der Verdichteranordnung 1 strömungsverbunden, vorzugsweise über einen Filter beziehungsweise Luftfilter. Das Strömungsführungselement 20 ist an dem Verdichtergehäuse 19 befestigt, beispielsweise mittels wenigstens einer Schraube 21. An dem Strömungsführungselement 20 wiederum ist die Unterdruckbereitstellungseinrichtung 9 befestigt, nämlich vorzugsweise wiederum mittels einer Schraube 22.

An dem Strömungsführungselement 20 liegen ein erster Anschluss 23 sowie ein zweiter Anschluss 24 vor, wobei der erste Anschluss 23 über das Strömungsführungselement 20 mit der Hochdruckseite 7 des Verdichters 5 und der zweite Anschluss 24 ebenfalls über das Strömungsführungselement 20 mit der Niederdruckseite 6 strömungsverbunden ist. Beispielsweise ist der zweite Anschluss 24 innerhalb des Strömungsführungselements 20 an den Frischgaseinlasskanal strömungstechnisch angeschlossen.

Die Unterdruckbereitstellungseinrichtung 9 weist einen Treibmitteleinlassanschluss 25 (hier nicht erkennbar) sowie einen Treibmittelauslassanschluss 26 auf. Der Treibmitteleinlassanschluss 25 wird bei einer Montage der Unterdruckbereitstellungseinrichtung 9 an dem Strömungsführungselement 20 mit dem ersten Anschluss 23 und der Treibmittelauslassanschluss 26 mit dem zweiten Anschluss 24 in Strömungsverbindung gebracht. Sowohl der Treibmitteleinlassanschluss 25 als auch der Treibmittelauslassanschluss 26 liegen an einem Gehäuse 27 der Unterdruckbereitstellungseinrichtung 9 vor.

Der Treibmittelauslassanschluss 26 ist als Steckanschluss ausgebildet und verfügt insoweit über einen Steckverbindungsvorsprung 28, der zur Aufnahme in eine Steckverbindungsaufnahme 29 des zweiten Anschlusses 24 vorgesehen und ausgebildet ist. Der Treibmitteleinlassanschluss 25 und der erste Anschluss 23 weisen hingegen jeweils eine Anlagefläche 30 beziehungsweise 31 auf. Die Strömungsverbindung zwischen dem Treibmitteleinlassanschluss 25 und dem ersten Anschluss 23 wird durch planes Anlegen dieser beiden Anlageflächen 30 und 31 aneinander hergestellt.

Es ist erkennbar, dass das Gehäuse 27 mehrteilig ist und aus einem Grundelement 32 und einem Deckel 33 besteht. Der Deckel 33 ist vorzugsweise unlösbar mit dem Grundelement 32 verbunden, jedoch separat von diesem hergestellt. Das Grundelement 32 und der Deckel 33 werden insoweit erst nach ihrer Herstellung miteinander verbunden. An dem Gehäuse 27, in dem hier dargestellten Ausführungsbeispiel an dem Grundelement 32, ist der Unterdruckanschluss 18 ausgebildet, an welchen der wenigstens eine Unterdruckverbraucher 10 über eine Unterdruckleitung 34 anschließbar ist.

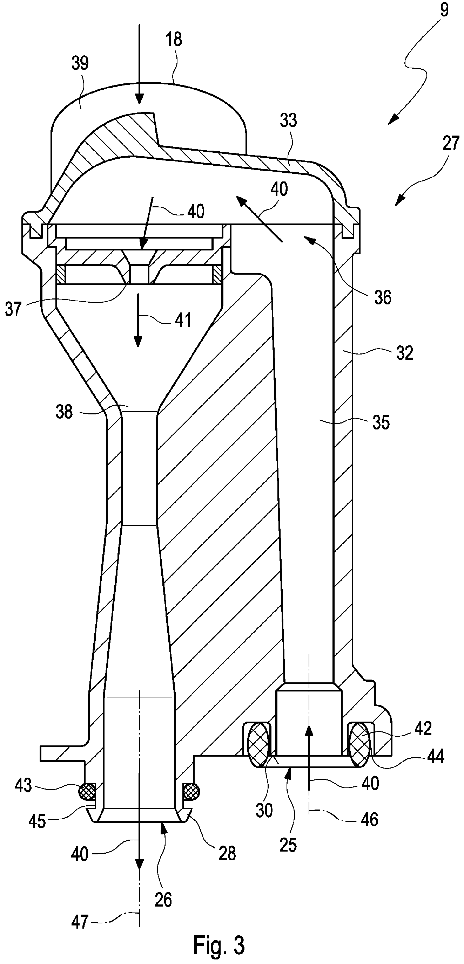

Die Figur 3 zeigt eine Längsschnittdarstellung der Unterdruckbereitstellungseinrichtung 9. Es ist zu erkennen, dass in dem Gehäuse 27 ein Treibmittelkanal 35 vorliegt, über den der Treibmitteleinlassanschluss 25 und der Treibmittelauslassanschluss 26 innerhalb des Gehäuses 27 strömungstechnisch miteinander verbunden sind. Der Treibmittelkanal 35 liegt größtenteils in dem Grundelement 32 vor. Bereichsweise wird er jedoch von dem Deckel 33 begrenzt, wodurch eine Umlenkung 36 realisiert ist.

Innerhalb des Gehäuses 27 liegt wenigstens eine Düse 37 in dem Strömungsweg zwischen dem Treibmitteleinlassanschluss 25 und dem Treibmittelauslassanschluss 26, also in dem Treibmittelkanal 35, vor. In dem hier dargestellten Ausführungsbeispiel ist die Düse 37 als Treibstrahldüse ausgebildet, welche in eine Mischkammer 38 einmündet, an welche auch der Unterdruckanschluss 18 über einen Unterdruckkanal 39 strömungstechnisch angeschlossen ist. Bei einer Durchströmung des Treibmittelkanals 35 mit Treibmittel gemäß den Pfeilen 40 wird, wie durch den Pfeil 41 angedeutet, Fluid durch den Unterdruckkanal 39 angesaugt und von dem Treibmittel in Richtung des Treibmittelauslassanschlusses 26 mitgenommen. Hierdurch wird an dem Unterdruckanschluss 18 Unterdruck bereitgestellt.

Es ist erkennbar, dass der Treibmitteleinlassanschluss 25 eine Axialringdichtung 42 und der Treibmittelauslassanschluss 26 eine Radialringdichtung 43 aufweist. Die Axialringdichtung 42 ist in einer Dichtungsaufnahme 44 und die Radialringdichtung 43 in einer Dichtungsaufnahme 45 angeordnet. Die Dichtungsaufnahmen 44 und 45 sind in dem Gehäuse 27, insbesondere in dem Grundelement 32, ausgebildet. Es ist weiterhin erkennbar, dass der Treibmitteleinlassanschluss 25 und der Treibmittelauslassanschluss 26 parallel versetzt zueinander an dem Gehäuse 27 ausgebildet sind. Hierzu steht der Steckverbindungsvorsprung 28 über eine den Treibmitteleinlassanschluss 25 definierende Ebene über beziehungsweise ragt über diese hinaus, nämlich in axialer Richtung bezüglich einer Längsmittelachse 46 des Treibmittelkanals auf Seiten des Treibmitteleinlassanschlusses 25 oder einer Längsmittelachse 47 des Treibmittelkanals 35 auf Seiten des Treibmittelauslassanschlusses 26.

Die vorstehend bereits erwähnte Schraube 22, mittels welcher die Unterdruckbereitstellungseinrichtung 9 an dem Strömungsführungselement 20 befestigt ist, weist vorzugsweise eine Längsmittelachse auf, welche zu der Längsmittelachse 46 und/oder der Längsmittelachse 47 parallel verläuft. Hierdurch wird eine besonders gute Dichtwirkung insbesondere der Axialringdichtung 42 bewirkt. Entsprechend der Ausrichtung der Schraube 22 ist eine Aufnahmeöffnung 48 zur Aufnahme der Schraube 22 mit ihrer Längsmittelachse ebenfalls parallel zu der Längsmittelachse 46 und/oder der Längsmittelachse 47 ausgerichtet.

Die beschriebene Verdichteranordnung 1 hat den Vorteil, dass zum einen die Unterdruckbereitstellungseinrichtung 9 kompakt aufgebaut und zudem austauschbar ist. Zum anderen wird eine hohe Betriebssicherheit sichergestellt, indem der Treibmittelauslassanschluss 26 als Steckanschluss ausgebildet ist, wohingegen die Strömungsverbindung zwischen dem Treibmitteleinlassanschluss 25 und dem ersten Anschluss 23 durch planes Anlegen der Anlageflächen 30 und 31 aneinander hergestellt wird. Hierdurch ist ein besonders einfaches Erkennen auf eine Undichtheit beziehungsweise Leckage möglich.

## Patentansprüche

1. Verdichteranordnung (1) für eine Brennkraftmaschine (2), mit einem in einem Verdichtergehäuse (19) angeordneten, eine Niederdruckseite (6) und eine Hochdruckseite (7) aufweisenden Verdichter (5) und mit einer Unterdruckbereitstellungseinrichtung (9), die einen einerseits über einen Treibmitteleinlassanschluss (25) an die Hochdruckseite (7) des Verdichters (5) und andererseits über einen Treibmittelauslassanschluss (26) an die Niederdruckseite (6) des Verdichters (5) strömungstechnisch angeschlossenen Treibmittelkanal (35) mit einer Düse (37) und einen strömungstechnisch zwischen dem Treibmitteleinlassanschluss (25) und dem Treibmittelauslassanschluss (26) in den Treibmittelkanal (35) einmündenden Unterdruckkanal (39) aufweist, wobei der Treibmittelkanal (35) in einem von dem Verdichtergehäuse (19) separaten Gehäuse (27) ausgebildet ist, an dem der Treibmitteleinlassanschluss (25) und der Treibmittelauslassanschluss (26) ausgebildet sind, wobei der Treibmitteleinlassanschluss (25) mit einem ersten Anschluss (23) und der Treibmittelauslassanschluss (26) mit einem zweiten Anschluss (24) in strömungstechnische Verbindung bringbar ist, wobei der erste Anschluss (23) und der zweite Anschluss (24) an einem mit dem Verdichtergehäuse (19) verbundenen Strömungsführungselement (20) ausgebildet sind, wobei der Treibmittelauslassanschluss (26) einen Steckverbindungsvorsprung (28) und der zweite Anschluss (24) eine Steckverbindungsaufnahme (29) zur Aufnahme des Steckverbindungsvorsprungs (28) aufweist, wobei der Treibmitteleinlassanschluss (25) und der erste Anschluss (23) jeweils eine eine Anlagefläche (30,31) durchgreifende Durchtrittsöffnung aufweisen, sodass eine Strömungsverbindung zwischen dem Treibmitteleinlassanschluss (25) und dem ersten Anschluss (23) durch planes Anlegen der Anlageflächen (30,31) aneinander herstellbar ist,
**dadurch gekennzeichnet, dass**
lediglich der Treibmittelauslassanschluss (26) als Steckanschluss ausgebildet ist.

2. Verdichteranordnung nach Anspruch 1, **dadurch gekennzeichnet, dass** der Treibmitteleinlassanschluss (25) eine mit dem ersten Anschluss (23) zusammenwirkende Axialringdichtung (42) und der Treibmittelauslassanschluss (26) eine mit dem zweiten Anschluss (24) zusammenwirkende Radialringdichtung (43) aufweist.

3. Verdichteranordnung nach einem der vorhergehenden Ansprüche, **dadurch gekennzeichnet, dass** der Treibmittelkanal (35) innerhalb des Gehäuses (27) eine Umlenkung (36) aufweist, sodass der Treibmitteleinlassanschluss (25) und der Treibmittelauslassanschluss (26) auf derselben Seite des Gehäuses (27) angeordnet sind.

4. Verdichteranordnung nach einem der vorhergehenden Ansprüche, **dadurch gekennzeichnet, dass** der Treibmitteleinlassanschluss (25) und der Treibmittelauslassanschluss (26) parallel versetzt zueinander an dem Gehäuse (27) ausgebildet sind.

5. Verdichteranordnung nach Anspruch 3, **dadurch gekennzeichnet, dass** die Umlenkung (36) mittels eines den Treibmittelkanal (35) bereichsweise begrenzenden Deckels (33) des Gehäuses (27) ausgebildet ist.

6. Verdichteranordnung nach einem der vorhergehenden Ansprüche, **dadurch gekennzeichnet, dass** das Gehäuse (27) mittels wenigstens einer Schraube (22) befestigbar ist, wobei eine Längsmittelachse einer Aufnahmeöffnung (48) des Gehäuses (27) zur Aufnahme der Schraube (22) parallel zu einer Längsmittelachse (46) des Treibmittelkanals (35) an dem Treibmitteleinlassanschluss (25) und/oder einer Längsmittelachse (47) des Treibmittelkanals (35) an dem Treibmittelauslassanschluss (26) angeordnet ist.

7. Verfahren zum Betreiben einer Verdichteranordnung (1) für eine Brennkraftmaschine (2), insbesondere einer Verdichteranordnung (1) nach einem oder mehreren der vorhergehenden Ansprüche, wobei die Verdichteranordnung (1) über einen in einem Verdichtergehäuse (19) angeordneten, eine Niederdruckseite (6) und eine Hochdruckseite (7) aufweisenden Verdichter (5) und über eine Unterdruckbereitstellungseinrichtung (9) verfügt, die einen einerseits über einen Treibmitteleinlassanschluss (25) an die Hochdruckseite (7) des Verdichters (5) und andererseits über einen Treibmittelauslassanschluss (26) an die Niederdruckseite (6) des Verdichters (5) strömungstechnisch angeschlossenen Treibmittelkanal (35) mit einer Düse (37) und eine strömungstechnisch zwischen dem Treibmitteleinlassanschluss (25) und dem Treibmittelauslassanschluss (26) in den Treibmittelkanal (35) einmündenden Unterdruckkanal (39) aufweist, wobei der Treibmittelkanal (35) in einem von dem Verdichtergehäuse (19) separaten Gehäuse (27) ausgebildet ist, an dem der Treibmitteleinlassanschluss (25) und der Treibmittelauslassanschluss (26) ausgebildet sind, wobei der Treibmitteleinlassanschluss (25) mit einem ersten Anschluss (23) und der Treibmittelauslassanschluss (26) mit einem zweiten Anschluss (24) in strömungstechnische Verbindung bringbar ist, wobei der erste Anschluss (23) und der zweite Anschluss (24) an einem mit dem Verdichtergehäuse (19) verbundenen Strömungsführungselement (20) ausgebildet sind, wobei der Treibmittelauslassanschluss (26) einen Steckverbindungsvorsprung (28) und der zweite Anschluss (24) eine Steckverbindungsaufnahme (29) zur Aufnahme des Steckverbindungsvorsprungs (28) aufweist, wobei der Treibmitteleinlassanschluss (25) und der erste Anschluss (23) jeweils eine eine Anlagefläche (30,31) durchgreifende Durchtrittsöffnung aufweisen, sodass eine Strömungsverbindung zwischen dem Treibmitteleinlassanschluss (25) und dem ersten Anschluss (23) durch planes Anlegen der Anlageflächen (30,31) aneinander hergestellt ist, **dadurch gekennzeichnet, dass** lediglich der Treibmittelauslassanschluss (26) als Steckanschluss ausgebildet ist und dass mittels eines Drucksensors ein Druck in dem Unterdruckkanal (39) oder auf der Hochdruckseite (7) des Verdichters (5) gemessen und bei Unterschreiten oder Überschreiten eines Grenzwerts durch den Druck auf eine Leckage erkannt wird.

## Claims

1. Compressor arrangement (1) for an internal combustion engine (2), comprising a compressor (5) arranged in a compressor housing (19) and having a low-pressure side (6) and a high-pressure side (7), and comprising a reduced pressure supply device (9), which has a propellant duct (35), which is fluidically connected, on the one hand, via a propellant inlet port (25) to the high-pressure side (7) of the compressor (5) and, on the other hand, via a propellant outlet port (26) to the low-pressure side (6) of the compressor (5), and has a nozzle (37) and a reduced pressure duct (39), which opens fluidically into the propellant duct (35) between the propellant inlet port (25) and the propellant outlet port (26), wherein the propellant duct (35) is configured in a housing (27) that is separate from the compressor housing (19), on which the propellant inlet port (25) and the propellant outlet port (26) are configured, wherein the propellant inlet port (25) can be brought into fluidic connection with a first port (23) and the propellant outlet port (26) can be brought into fluidic connection with a second port (24), wherein the first port (23) and the second port (24) are configured on a flow guide element (20) that is connected to the compressor housing (19), wherein the propellant outlet port (26) has a plug connection projection (28) and the second port (24) has a plug connection socket (29) for receiving the plug connection projection (28), the propellant inlet port (25) and the first port (23) each having an opening passing through an abutment surface (30, 31), so that a flow connection can be established between the propellant inlet port (25) and the first port (23) by placing the abutment surfaces (30, 31) flat against one another, **characterised in that** only the propellant outlet port (26) is configured as a plug-in connection.

2. Compressor arrangement according to claim 1, **characterised in that** the propellant inlet port (25) has an axial ring seal (42) that cooperates with the first port (23) and that the propellant outlet port (26) has a radial ring seal (43) that cooperates with the second port (24).

3. Compressor arrangement according to any one of the preceding claims, **characterised in that** the propellant duct (35) has a deflection (36) within the housing (27) so that the propellant inlet port (25) and the propellant outlet port (26) are arranged on the same side of the housing (27).

4. Compressor arrangement according to any one of the preceding claims, **characterised in that** the propellant inlet port (25) and the propellant outlet port (26) are configured on the housing (27) in parallel and offset to each other.

5. Compressor arrangement according to claim 3, **characterised in that** the deflection (36) is configured by means of a cover (33) of the housing (27) which delimits the propellant duct (35) in certain regions.

6. Compressor arrangement according to any one of the preceding claims, **characterised in that** the housing (27) can be fastened by means of at least one screw (22), wherein a longitudinal central axis of a receiving opening (48) of the housing (27) for receiving the screw (22) is arranged parallel to a longitudinal central axis (46) of the propellant duct (35) at the propellant inlet port (25) and/or a longitudinal central axis (47) of the propellant duct (35) at the propellant outlet port (26).

7. Method of operating a compressor arrangement (1) for an internal combustion engine (2), in particular a compressor arrangement (1) according to one or more of the preceding claims, the compressor arrangement (1) having a compressor (5) arranged in a compressor housing (19) and having a low-pressure side (6) and a high-pressure side (7), and having a reduced pressure supply device (9), which has a propellant duct (35), which is fluidically connected, on the one hand, via a propellant inlet port (25) to the high-pressure side (7) of the compressor (5) and, on the other hand, via a propellant outlet port (26) to the low-pressure side (6) of the compressor (5), and has a nozzle (37) and a vacuum duct (39), which opens fluidically into the propellant duct (35) between the propellant inlet port (25) and the propellant outlet port (26), wherein the propellant duct (35) is configured in a housing (27) separate from the compressor housing (19), on which the propellant inlet port (25) and the propellant outlet port (26) are configured, wherein the propellant inlet port (25) can be brought into fluidic connection with a first port (23) and the propellant outlet port (26) can be brought into fluidic connection with a second port (24), wherein the first port (23) and the second port (24) are configured on a flow guide element (20) connected to the compressor housing (19), the propellant outlet port (26) having a plug connection projection (28) and the second port (24) having a plug connection socket (29) for receiving the plug connection projection (28), the propellant inlet port (25) and the first port (23) each having an opening passing through an abutment surface (30, 31), so that a flow connection is established between the propellant inlet port (25) and the first port (23) by placing the abutment surfaces (30, 31) flat against one another, **characterised in that** only the propellant outlet port (26) is configured as a plug-in connection and **in that** a pressure in the reduced pressure duct (39) or on the high pressure side (7) of the compressor (5) is measured by means of a pressure sensor and a leakage is detected when the pressure falls below or exceeds a threshold value.

## Revendications

1. Ensemble compresseur (1) pour un moteur à combustion interne (2), avec un compresseur (5) agencé dans un boîtier de compresseur (19), présentant un côté basse pression (6) et un côté haute pression (7) et avec un dispositif de fourniture de dépression (9) qui présente un canal d'agent propulseur (35) raccordé d'une part par le biais d'un raccord d'entrée d'agent propulseur (25) au côté haute pression (7) du compresseur (5) et d'autre part par le biais d'un raccord de sortie d'agent propulseur (26) au côté basse pression (6) du compresseur (5) en écoulement avec une buse (37) et un canal de dépression (39) débouchant en écoulement entre le raccord d'entrée d'agent propulseur (25) et le raccord de sortie d'agent propulseur (26) dans le canal d'agent propulseur (35), dans lequel le canal d'agent propulseur (35) est réalisé dans un boîtier (27) séparé du boîtier de compresseur (19), au niveau duquel le raccord d'entrée d'agent propulseur (25) et le raccord de sortie d'agent propulseur (26) sont réalisés, dans lequel le raccord d'entrée d'agent propulseur (25) peut être amené en liaison d'écoulement avec un premier raccord (23) et le raccord de sortie d'agent propulseur (26) à un second raccord (24), dans lequel le premier raccord (23) et le second raccord (24) sont réalisés au niveau d'un élément de guidage d'écoulement (20) relié au boîtier de compresseur (19), dans lequel le raccord de sortie d'agent propulseur (26) présente une saillie de liaison par enfichage (28) et le second raccord (24) présente un logement de liaison par enfichage (29) pour le logement de la saillie de liaison par enfichage (28), dans lequel le raccord d'entrée d'agent propulseur (25) et le premier raccord (23) présentent respectivement une ouverture de passage traversant une surface d'appui (30, 31) de sorte qu'une liaison d'écoulement entre le raccord d'entrée d'agent propulseur (25) et le premier raccord (23) puisse être établie par le placement à plat des surfaces d'appui (30, 31) l'une contre l'autre, **caractérisé en ce que** juste le raccord de sortie d'agent propulseur (26) est réalisé comme raccord d'enfichage.

2. Ensemble compresseur selon la revendication 1, **caractérisé en ce que** le raccord d'entrée d'agent propulseur (25) présente une garniture annulaire axiale (42) coopérant avec le premier raccord (23) et le raccord de sortie d'agent propulseur (26) présente une garniture annulaire radiale (43) coopérant avec le second raccord (24).

3. Ensemble compresseur selon l'une quelconque des revendications précédentes, **caractérisé en ce que** le canal d'agent propulseur (35) présente à l'intérieur du boîtier (27) une déviation (36) de sorte que le raccord d'entrée d'agent propulseur (25) et le raccord de sortie d'agent propulseur (26) soient agencés sur le même côté du boîtier (27).

4. Ensemble compresseur selon l'une quelconque des revendications précédentes, **caractérisé en ce que** le raccord d'entrée d'agent propulseur (25) et le raccord de sortie d'agent propulseur (26) sont réalisés parallèlement en déport l'un de l'autre au niveau du boîtier (27).

5. Ensemble compresseur selon la revendication 3, **caractérisé en ce que** la déviation (36) est réalisée au moyen d'un couvercle (33) délimitant par endroits le canal d'agent propulseur (35) du boîtier (27).

6. Ensemble compresseur selon l'une quelconque des revendications précédentes, **caractérisé en ce que** le boîtier (27) peut être fixé au moyen d'au moins une vis (22), dans lequel un axe médian longitudinal d'une ouverture de logement (48) du boîtier (27) est agencé pour le logement de la vis (22) parallèlement à un axe médian longitudinal (46) du canal d'agent propulseur (35) au niveau du raccord d'entrée d'agent propulseur (25) et/ou un axe médian longitudinal (47) du canal d'agent propulseur (35) au niveau du raccord de sortie d'agent propulseur (26).

7. Procédé de fonctionnement d'un ensemble compresseur (1) pour un moteur à combustion interne (2), en particulier d'un ensemble compresseur (1) selon l'une ou plusieurs quelconques des revendications précédentes, dans lequel l'ensemble compresseur (1) dispose d'un compresseur (5) agencé dans un boîtier de compresseur (19), présentant un côté basse pression (6) et un côté haute pression (7) et d'un dispositif de fourniture de dépression (9) qui présente un canal d'agent propulseur (35) raccordé d'une part par le biais d'un raccord d'entrée d'agent propulseur (25) au côté haute pression (7) du compresseur (5) et d'autre part par le biais d'un raccord de sortie d'agent propulseur (26) au côté basse pression (6) du compresseur (5) en écoulement avec une buse (37) et un canal de dépression (39) débouchant en écoulement entre le raccord d'entrée d'agent propulseur (25) et le raccord de sortie d'agent propulseur (26) dans le canal d'agent propulseur (35), dans lequel le canal d'agent propulseur (35) est réalisé dans un boîtier (27) séparé du boîtier de compresseur (19), au niveau duquel le raccord d'entrée d'agent propulseur (25) et le raccord de sortie d'agent propulseur (26) sont réalisés, dans lequel le raccord d'entrée d'agent propulseur (25) peut être amené en liaison d'écoulement avec un premier raccord (23) et le raccord de sortie d'agent propulseur (26) avec un second raccord (24), dans lequel le premier raccord (23) et le second raccord (24) sont réalisés au niveau d'un élément de guidage d'écoulement (20) relié au boîtier de compresseur (19), dans lequel le raccord de sortie d'agent propulseur (26) présente une saillie de liaison par enfichage (28) et le second raccord (24) présente un logement de liaison par enfichage (29) pour le logement de la saillie de liaison par enfichage (28), dans lequel le raccord d'entrée d'agent propulseur (25) et le premier raccord (23) présentent respectivement une ouverture de passage traversant une surface d'appui (30, 31) de sorte qu'une liaison d'écoulement entre le raccord d'entrée d'agent propulseur (25) et le premier raccord (23) puisse être établie par le placement à plat des surfaces d'appui (30, 31) l'une contre l'autre, **caractérisé en ce que** juste le raccord de sortie d'agent propulseur (26) est réalisé comme raccord d'enfichage et qu'une pression dans le canal de dépression (39) ou sur le côté haute pression (7) du compresseur (5) est mesurée au moyen d'un capteur de pression et lors de la non-atteinte ou du dépassement d'une valeur limite par la pression une fuite est détectée.
